# EUROPÄISCHE PATENTANMELDUNG

(11) **EP 2 400 360 A1**
(43) Veröffentlichungstag der Anmeldung: **28.12.2011**
(21) Anmeldenummer: 10165978.7
(22) Anmeldetag: 15.06.2010
(51) Int. Cl.: G05B 19/042, G05B 19/05, G05B 19/418, H02J 3/00, G06Q 10/00, G06Q 50/00

(54) **Automatisierungsgerät und Verfahren zur Energieoptimierung**

(71) Anmelder: SIEMENS AKTIENGESELLSCHAFT, 80333 München (DE)
(72) Erfinder: Lange, Harald, 04229 Leipzig (DE); Schönherr, Holger, 90537 Feucht (DE); Wicke, Joachim, Dr., 04178 Leipzig (DE)

(57) **Zusammenfassung**

Die Erfindung betrifft ein Automatisierungsgerät (1) zur Steuerung eines industriellen Prozesses, ausgestaltet um Betriebsmittel (2) programmgesteuert zu schalten mit
- einer Recheneinheit (3) zur Programmbearbeitung,
- einem Programmspeicher (4)
- einem Ausgabemittel (5) zur Ausgabe eines Prozessabbildes (6) von Schaltzuständen der Betriebsmittel(2),

**gekennzeichnet** durch ein Auswertemittel (7) und eine Zuordnungsliste (8), wobei in der Zuordnungsliste (8) für die Betriebsmittel (2) Energieverbrauchswerte hinterlegt sind, wobei das Auswertemittel (7) dazu ausgestaltet ist, den Betriebsmitteln (2) in Abhängigkeit von ihrem Schaltzustand einen Verbrauchswert (E) zuzuordnen.

## Beschreibung

Die Erfindung betrifft ein Automatisierungsgerät zur Steuerung eines industriellen Prozesses, ausgestaltet um Betriebsmittel programmgesteuert zu schalten mit einer Recheneinheit zur Programmbearbeitung, einem Programmspeicher, einem Ausgabemittel zur Ausgabe eines Prozessabbildes von Schaltzuständen der Betriebsmittel.

Des Weiteren betrifft die Erfindung ein Verfahren zur Steuerung eines industriellen Prozesses, wobei über ein in einer Recheneinheit ablaufendes Programm Betriebsmittel über ein Ausgabemittel zur Ausgabe eines Prozessabbildes geschaltet werden. Vorrichtung und Verfahren beziehen sich auf einen energieverbrauchsoptimierenden Steuerungseinsatz, vorzugsweise bei speicherprogrammierbaren Steuerungen.

Anfallende Energiekosten in der Industrie sind schon lange nicht mehr vernachlässigbar und werden von der Betriebswirtschaft nicht kritiklos bezahlt. Produktionsleiter stehen unter Druck, sie müssen Einsparpotentiale und Verlustbringer identifizieren und gleichzeitig den steigenden Anforderungen an eine Versorgungsstabilität und der daraus resultierenden Produktsicherheit gerecht werden.

Nach dem Stand der Technik ist es bekannt, dass die momentan herrschenden Verbrauchswerte von elektrischen Verbrauchern mittels Messgeräten erfasst werden und zu einem Gesamtverbrauch auf einem entsprechenden Anzeigegerät dargestellt werden. Beispielsweise ist in jedem Haushalt ein Stromzähler bekannt, welcher einen Verbrauch in Kilowattstunden der angeschlossenen Haushaltsgeräte darstellt.

Es ist Aufgabe der vorliegenden Erfindung ein Automatisierungsgerät bereitzustellen, welches die momentan herrschenden Verbrauchswerte darstellen kann ohne dabei Messgeräte in einem zu steuernden Prozess zu installieren.

Die Aufgabe wird für das eingangs genannte Automatisierungsgerät dadurch gelöst, dass das Automatisierungsgerät ein Auswertemittel und eine Zuordnungsliste aufweist, wobei in der Zuordnungsliste für die Betriebsmittel Energieverbrauchswerte hinterlegt sind, wobei das Auswertemittel dazu ausgestaltet ist, den Betriebsmitteln in Abhängigkeit von ihrem Schaltzustand einen Verbrauchswert zuzuordnen. In einem Automatisierungsgerät, vorzugsweise einer speicherprogrammierbaren Steuerung, werden elektrische Verbraucher über ein in der Steuerung ablaufendes Programm angesteuert bzw. geschaltet. Mit Vorteil ist ein Auswertemittel vorhanden, welches mit der Recheneinheit derart zusammenarbeitet, dass das Auswertemittel eine Aussage darüber gibt, welche Verbraucher momentan aufgrund des Programmes sich in welchem Schaltzustand befinden. Aus der Zuordnungsliste kann das Auswertemittel die zu den geschalteten Betriebsmitteln zugehörigen Energieverbrauchswerte ermitteln und dadurch kann eine Aussage über den momentan herrschenden Gesamtverbrauchswert einer zu steuernden industriellen Anlage gegeben werden.

In einer weiteren Ausgestaltung weist die Zuordnungsliste für Betriebsmittel eine Mehrzahl an statusabhängigen Verbrauchswerten auf, wobei der Status eines Betriebsmittels in Unterzustände unterteilt ist. Der einfachste Status eines Betriebsmittels wäre ein Status mit zwei Schaltzuständen, nämlich ein erster Zustand für "Ein" und ein zweiter Zustand für "Aus". Die elektrischen Betriebsmittel, wie beispielsweise ein Motor, können aber durchaus verschiedene Zustände annehmen, welche beispielsweise ein Anfahren, einen Normalbetrieb, ein Standby-Betrieb oder ein gänzliches Abschalten sein könnten. Jedem dieser Unterzustände könnte dann ein spezifischer momentaner Verbrauchswert zugeordnet werden.

In einer weiterführenden Ausgestaltung kann ein entstehender Energieverbrauch dadurch optimiert werden, dass ein Prognosemittel vorhanden ist, welches dazu ausgestaltet ist ein Vorhersage-Prozessabbild für zukünftige Schaltzustände der Betriebsmittel zu generieren, wobei das Auswertemittel weiterhin dazu ausgestaltet ist, mittels der Zuordnungsliste und des Vorhersage-Prozessabbildes den zukünftigen Energiebedarf zu ermitteln. Die zukünftigen Schaltzustände sind vorzugsweise bereits in der Steuerung hinterlegt oder können sich aufgrund von Echtzeitberechnungen in der Steuerung für zukünftige Zeiten ergeben. Mit dem Wissen, der in der Zukunft liegenden auftretenden Schaltzustände der Betriebsmittel kann eine Prognose des Energieverbrauches erstellt werden.

Für einen noch verbesserten energieverbrauchsoptimierten Betrieb des Automatisierungsgerätes, weist dieses ein Prognosemittel auf, in welchem ein Optimierungsalgorithmus enthalten ist, dieser Optimierungsalgorithmus ist mit dem Prognosemittel dazu ausgestaltet, Zuschaltzeitpunkte für die Betriebsmittel bereitzustellen, wobei die Zuschaltzeitpunkte bezogen auf einen minimierten Gesamtenergiebedarf der Betriebsmittel bereitgestellt werden. Es können somit beispielsweise in verfahrenstechnischen Prozessen die Zuschaltzeitpunkte und die dabei entstehenden verbrauchten Leistungen energieoptimal gewählt werden. Vorteilhafter Weise kann hierdurch eine detaillierte Vorhersage des Energiebedarfes einer Anlage erfolgen.

In einer weiteren Ausgestaltung weist das Automatisierungsgerät eine erste Kommunikationsschnittstelle zur Kommunikation mit Energienetzen oder Energieerzeugern auf. Die zuvor gewonnen Prognoseinformation über einen zu erwartenden Energiebedarf kann einem Energieversorgungsunternehmen bereitgestellt werden und dieser kann anhand einer derartigen Kurzzeitprognose der Hauptverbraucher seines Versorgungsgebietes einen ausgewogenen Energiemix auf seiner Erzeugungsseite bereitstellen bzw. vom Netz nehmen.

Auch von Vorteil ist es, wenn das Automatisierungsgerät eine zweite Kommunikationsschnittstelle zur Kommunikation mit einem übergeordneten Leitsystem aufweist. Mit Hilfe der vorliegenden Verbrauchswerte und der zukünftigen Verbrauchswerte kann über das Leitsystem eine genaue Lastprognose für einen Energieeinkauf bereitgestellt werden. Es trägt weiterhin dazu bei den Leistungsbedarf der Produktion zu vergleichsmäßigen. Einsparpotentiale, steigender Energieverbrauch oder auch Reservepotentiale werden durch gezielte Erfassung von Bezug, Verteilung und Verbrauch erkannt und aufgedeckt. Eine prozesssensible Verbrauchersteuerung unterbindet Lastspitzen und garantiert eine Einhaltung eventuell bestehender Energiebezugsverträge durch Vorplanen, Ab- und Zuschalten von Verbrauchern.

Vorzugsweise weist das Automatisierungsgerät ein Steuermodul zum Absenden von Netzcodes für einen energieoptimierten Betrieb des Energienetzes auf. Dadurch wird ein wirkungsvoller Betrieb von Regelkraftwerken oder auch zukünftig von einem "Smart Grid" einfacher und effizienter möglich.

Es ist auch möglich, bestimmten Schaltvariablen und Ausgängen eine Energiepriorität zuzuordnen. Es wäre somit denkbar, dass bestimmte Verbraucher nur aktiviert werden können, wenn genügend Energie vorrätig ist. Dazu ist in der Zuordnungsliste den Betriebsmitteln eine Schaltpriorität zugeordnet, wobei das Auswertemittel dazu ausgestaltet ist, das Prozessabbild derart zu beeinflussen, dass nur Betriebsmittel mit einer entsprechenden Schaltpriorität zuschaltbar sind, um einen nicht zu übersteigenden Energieverbrauch einzuhalten.

Auch löst die eingangs genannte Aufgabe ein Verfahren zur Steuerung eines industriellen Prozesses, vorzugsweise wird das Verfahren bei dem zuvor genannten Automatisierungsgerät eingesetzt. Verfahrensgemäß werden über ein in der Recheneinheit ablaufendes Programm Betriebsmittel, Ein-/Ausgabemittel zur Ausgabe eines Prozessabbildes geschaltet, wobei eine Zuordnungsliste mit für die Betriebsmittel angegebenen Energieverbrauchswerten erstellt wird, und diese in ein Automatisierungsgerät geladen wird, wobei mit der Struktur des Programmes in Abhängigkeit von einer Schaltanweisung für ein Betriebsmittel eine Prognose über den zu erwartenden Energiebedarf der Betriebsmittel ermittelt wird.

Dabei werden vorzugsweise einem Betriebsmittel eine Mehrzahl von Verbrauchswerten zugeordnet, wobei ein Betriebsstatus eines Betriebsmittels in Unterzustände unterteilt wird. Denkbar wären Schaltzustände eines Motors wie eine Ausphase, eine Anlaufphase, einen Nennbetrieb, eine Auslaufphase usw., wobei insbesondere bei der Anlaufphase je nach Aggregat ein besonders hoher Energiebedarf entstehen kann.

In einem weiteren Verfahrensschritt wird mittels der Prognose ein Vorhersage-Prozessabbild für zukünftige Schaltzustände der Betriebsmittel generiert. Mittels des Vorhersage-Prozessabbildes kann genau gesagt werden, welches Betriebsmittel in welchem Schaltzustand in der Zukunft betrieben wird und somit durch ein Aufaddieren der zugehörigen Energieverbrauchswerte eine genaue Aussage über den Gesamtenergieverbrauchswert getroffen werden kann.

In einem weiter optimierenden Verfahrensschritt ist er vorteilhaft, wenn mittels eines Optimierungsalgorithmusses Zuschaltzeitpunkte für die Betriebsmittel berechnet werden, wobei die Zuschaltzeitpunkte bezogen auf einen minimierten Gesamtenergiebedarf der Betriebsmittel bereitgestellt werden.

Eine weitere Steigerung der Effektivität eines solchen Verfahrens wird dadurch erreicht, dass in der Zuordnungsliste den Betriebsmitteln Schaltprioritäten zugeordnet werden, und dass das Prozessabbild derart beeinflusst wird, dass bei einem vergebbaren nicht zu übersteigenden Energieverbrauchswert nur Betriebsmittel mit einer entsprechenden Schaltpriorität zugeschaltet werden. Diese Schaltprioritäten sind mit den Betriebsmitteln verknüpft so dass es auch möglich ist, Schaltvariablen und deren korrespondierenden Ausgängen Energieprioritäten zuzuordnen. Es ist somit möglich, bestimmte Verbraucher erst zu aktivieren, wenn genügend Energie vorrätig ist oder überhaupt nicht zu aktivieren, da ein Grenzenergieverbrauch momentan nicht überschritten werden darf.

Im Folgenden wird die Erfindung anhand eines Ausführungsbeispiels näher beschrieben und erläutert. Es zeigen:
- FIG 1: ein Automatisierungsgerät zum Schalten von Betriebsmitteln,
- FIG 2: eine Zuordnungsliste und
- FIG 3: ein Automatisierungsgerät mit Betriebsmitteln und einem Energienetz bzw. einem Energieerzeuger.

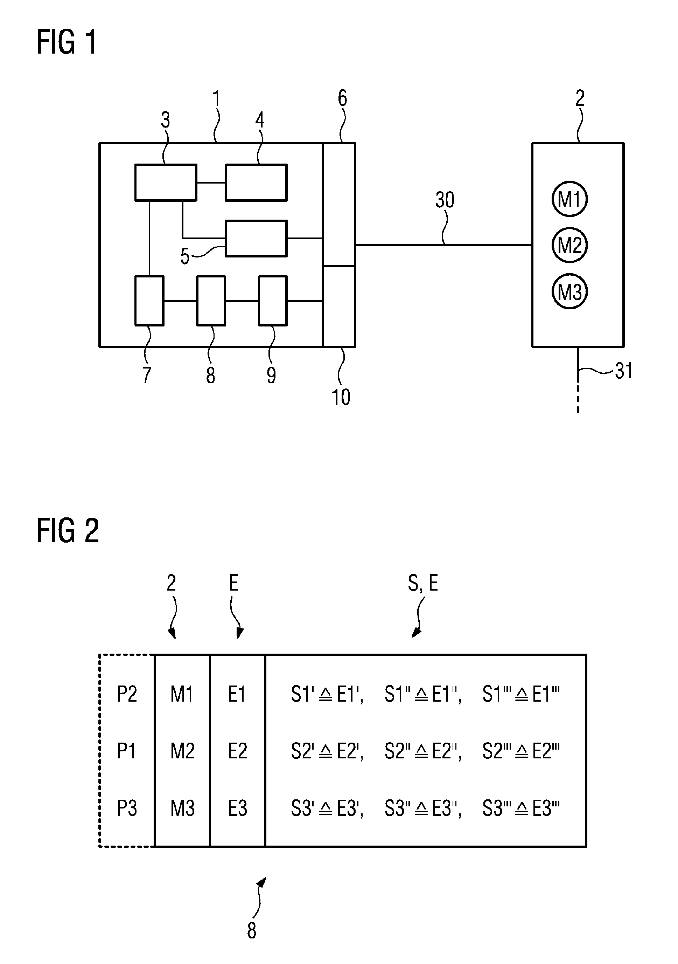

Gemäß FIG 1 ist ein Automatisierungsgerät 1 zur Steuerung eines industriellen Prozesses gezeigt, ausgestaltet um Betriebsmittel 2 programmgesteuert zu Schalten. Die Betriebsmittel 2 sind als ein erster Motor M1, ein zweiter Motor M2 und ein dritter Motor M3 ausgebildet. Das Automatisierungsgerät 1 verfügt über eine Recheneinheit 3, welche mit einem Programmspeicher 4 zusammenarbeitet und somit zyklisch Programmanweisungen zur Steuerung des industriellen Prozesses, insbesondere der Motoren M1,...,M3, ausführen kann. Über ein Ausgabemittel 5 werden in einem Prozessabbild 6 für einen Feldbus 30 Schaltzustände für die Motoren M1,...,M3 abgebildet. Die Schaltzustände liegen als Daten vor und werden über den Feldbus 30 in die Feldebene des industriellen Prozesses geleitet. Dort können sie über entsprechend ausgestaltete Feldgeräte den Motoren M1,...,M3 die jeweiligen Schaltbefehle übermitteln. Zur Energieversorgung der Motoren M1,...,M3 ist eine Energieversorgung 31 an die Betriebsmittel 2 angeschlossen.

Über ein in dem Automatisierungsgerät 1 angeordnetes Auswertemittel 7, welches mit der Recheneinheit 3 in Verbindung steht, werden mit Hilfe einer Zuordnungsliste 8 den Betriebsmitteln 2 in Abhängigkeit von ihren Schaltzuständen Verbrauchswerte E zugeordnet.

Wie in FIG 2 gezeigt, sind in der Zuordnungsliste 8 für die Betriebsmittel 2 die Energieverbrauchswerte E1,...,E3 hinterlegt. Die Zuordnungsliste 8 kann dabei eine Mehrzahl an statusabhängigen Verbrauchswerten E1',...,E3''' aufweisen, wobei der Status eines Betriebsmittels 2 in Unterzustände Sl',S3''' unterteilt ist. In einer Spalte für Betriebsmittel 2 ist der erste Motor M1, der zweite Motor M2 und der dritte Motor M3 als Betriebsmittel 2 aufgelistet.

In den zugehörigen Zeilen zu den Motoren ist in einer Spalte E für Verbrauchswerte dem ersten Motor M1 ein erster Verbrauchswert E1 dem zweiten Motor M2 ein zweiter Verbrauchswert E2 und dem dritten Motor M3 ein dritter Verbrauchswert E3 zugeordnet. Für statusabhängige Verbrauchswerte wie z.B. ein Sanftanlauf eines Motor ein weiterer Steigerungsanlauf ein Dauerbetrieb sind in den jeweiligen Zeilen statusabhängige Verbrauchswerte eingetragen.

Am Beispiel der ersten Zeile besitzt der erste Motor M1 einen Status S1' bei welchem er einen Energieverbrauch E1' aufweist, einen zweiten Status S1 " bei welchem er einen Energieverbrauch E1'' aufweist und einen dritten Status S1 " ' bei welchem er einen Energieverbrauch E1''' aufweist. Für die restlichen Zeilen der Zuordnungsliste 8 gilt eine analoge Zuordnung wie am Beispiel des ersten Motors M1 gezeigt.

Vor Inbetriebnahme des Automatisierungsgerätes 1 wird die Zuordnungsliste 8 mit für die Betriebsmittel 2 angegebenen Energieverbrauchswerten E erstellt und diese in das Automatisierungsgerät 1 geladen, wobei mit der Struktur des Programms in Abhängigkeit von einer Schaltanweisung für ein Betriebsmittel 2 eine Prognose für den zu erwartenden Energiebedarf des Betriebsmittels 2 ermittelt werden kann. Für diese Prognose weist das Automatisierungsgeräte 1 aus FIG 1 ein Prognosemittel 9 auf, welches mit der Zuordnungsliste 8 und einem Vorhersage-Prozessabbild 10 in datentechnischer Verbindung steht.

Das Prognosemittel 9 kann anhand der Vorhersage der zukünftig einzutretenden Schaltzustände, welche aus dem Programm abgeleitet werden können, ein Vorhersage-Prozessabbild 10 generieren und für das Automatisierungsgerät 1 bereithalten. Um eine derartige Prognose energieverbrauchsoptimiert zu erzeugen, weist das Prognosemittel 9 einen Optimierungsalgorithmus auf, welcher dazu ausgestaltet ist, Zuschaltzeitpunkte für die Betriebsmittel 2 bereitzustellen, wobei die Zuschaltzeitpunkte bezogen auf einen minimierten Gesamtenergiebedarf der Betriebsmittel, hierfür die Motoren M1,...,M3, bereitgestellt werden.

Eine weitere Energieoptimierung kann mit dem Automatisierungsgerät 1 dadurch erreicht werden, dass die Zuordnungsliste 8 eine weitere Spalte enthält, in denen den Betriebsmitteln 2 Schaltprioritäten P1,...,P3 zugeordnet sind, und das Prozessabbild 6 mit Hilfe des Auswertemittels 7 und der Recheneinheit 3 derart beeinflusst wird, dass bei einem vorgegebenen nicht zu übersteigenden Energieverbrauch nur Betriebsmittel 2 mit einer entsprechenden Schaltpriorität P zugeschaltet werden können. Kann beispielsweise in einer momentanen Situation nur ein Energieverbrauch Emax über die Energieversorgung 31 bereitgestellt werden und würde der Gesamtenergieverbrauch E1,...,E3 der Motoren M1,...,M3 diesen maximalen Energieverbrauch Emax übersteigen, so wird der dritte Motor M3 aufgrund der Schaltpriorität P3 nicht zugeschaltet. Vorrangig in dieser Betriebsphase sind der zweite Motor M2 mit der ersten Schaltpriorität P1 und der erste Motor M1 mit der zweiten Schaltpriorität P2.

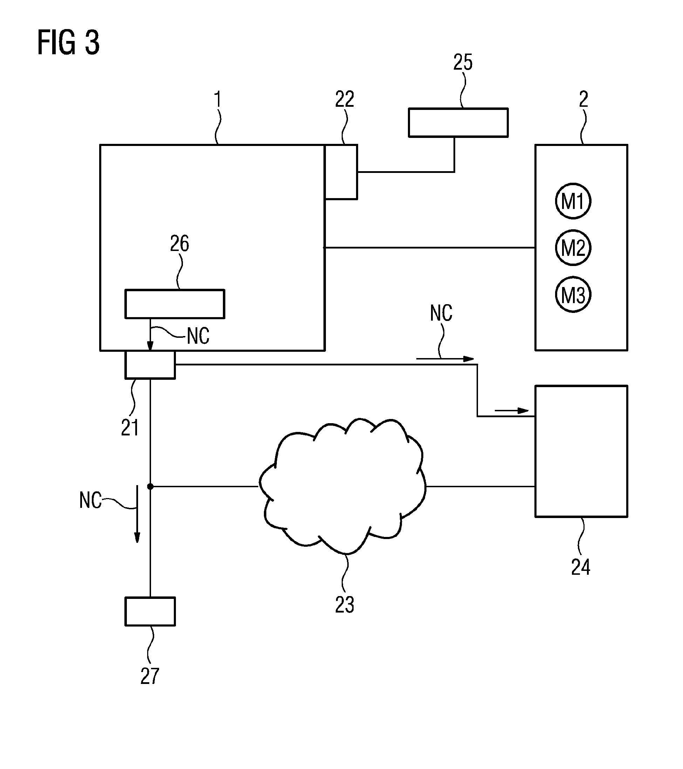

Gemäß FIG 3 ist das aus FIG 1 bekannte Automatisierungsgerät 1 erweitert dargestellt. In dieser FIG 3 weist das Automatisierungsgerät 1 die gleichen Komponenten wie aus FIG 1 bekannt, ebenfalls auf. Zusätzlich zu den bekannten Komponenten ist das Automatisierungsgerät 1 nun mit einem Steuermodul 26 ausgestaltet. Das Steuermodul 26 ist zum Absenden von Netzcodes NC über eine erste Kommunikationsschnittstelle 21 ausgestaltet. Das Automatisierungsgerät 1 ist damit befähigt mit einem Energienetz 23 oder einem Energieerzeuger 24 zu kommunizieren. Diese Netzcodes NC zeigen dem Energieerzeuger 24 bzw. dem Energienetz 23 die momentane Verbrauchslage der industriellen Anlage, in derer das Automatisierungsgerät 1 mit den Betriebsmitteln 2 eingesetzt ist, an. Ein Strombedarf/ Leistungsbedarf könnte z.B. an einer Strombörse mittels der Netzcodes NC ausgehandelt werden. Dazu ist dem Energienetz 23 eine Steuerungsanlage 27 zugeordnet. Über eine zweite Kommunikationsschnittstelle 22 kann das Automatisierungsgerät 1 mit seinen momentan ermittelten Verbrauchswerten oder mit seinen Prognosedaten mit einem übergeordnetem Leitsystem 25 kommunizieren.

Zur Erreichung einer neuen Qualität der Optimierung des Energieverbrauchs bzw. dessen gezielter Steuerung sind weitergehende Informationen über den Momentanzustand des Energieverbrauches einer Fabrik bzw. über die kurzfristig zu erwartenden Änderungen der Verbrauchswerte mit großem Vorteil in dem übergeordneten Leitsystem 25 auszuwerten.

Es wäre auch denkbar, neben den tatsächlich vorhanden Verbrauchsverhalten einer industriellen Anlage auch einen Anteil dezentraler Elektroenergieerzeugung hinzuzunehmen, z.B. kann eine industrielle Anlage zusätzlich Wind- oder Solar- bzw. Photovoltaik-Anlagen aufweisen. Diese erzeugten Energien können zusätzlich in den industriellen Prozessverbrauchswerten bzw. bei nicht erfordertem Verbrauch können diese Energien auch in das Energienetz 23 zurückgespeist werden. Diese Zurückspeisung kann ebenfalls als ein Algorithmus in dem Auswertemittel implementiert sein.

Als weiterer Vorteil ist zu nennen, dass die mit dem Automatisierungsgerät 1 erzeugte Prognose hinsichtlich des Verbrauches in den industriellen Prozess schnell mit einer ähnlichen Prognose auf der Seite des Energieerzeugers 24 verglichen werden kann. Beispielsweise sind so in einem Zeitfenster von wenigen Minuten sinnvolle Optimierungen auf der Erzeugerseite möglich. Damit ist auch ein Wirkungsvoller Betrieb von Regelkraftwerken oder auch zukünftig von "Smart Grid" einfacher und effizienter möglich. Eine Entlastung von Grundlastkraftwerken, die dann optimal betrieben werden können ist ein weiterer Vorteil.

## Patentansprüche

1. Automatisierungsgerät (1) zur Steuerung eines industriellen Prozesses, ausgestaltet um Betriebsmittel (2) programmgesteuert zu schalten mit
- einer Recheneinheit (3) zur Programmbearbeitung,
- einem Programmspeicher (4),
- einem Ausgabemittel (5) zur Ausgabe eines Prozessabbildes (6) von Schaltzuständen der Betriebsmittel(2),
**gekennzeichnet durch** ein Auswertemittel (7) und eine Zuordnungsliste (8), wobei in der Zuordnungsliste (8) für die Betriebsmittel (2) Energieverbrauchswerte (E1,...,E3) hinterlegt sind, wobei das Auswertemittel (7) dazu ausgestaltet ist, den Betriebsmitteln (2) in Abhängigkeit von ihrem Schaltzustand einen Verbrauchswert (E) zuzuordnen.

2. Automatisierungsgerät (1) nach Anspruch 1, wobei die Zuordnungsliste (8) für ein Betriebsmittel (2) eine Mehrzahl an statusabhängigen Verbrauchswerten (E',...,E''') aufweist, wobei der Status eines Betriebsmittels (2) in Unterzustände (S',...,S''') unterteilt ist.

3. Automatisierungsgerät (1) nach einem der Ansprüche 1 oder 2, mit einem Prognosemittel (9), welches dazu ausgestaltet ist ein Vorhersage-Prozessabbild (10) für zukünftige Schaltzustände der Betriebsmittel (2) zu generieren, wobei das Auswertemittel (7) weiterhin dazu ausgestaltet ist mittels der Zuordnungsliste (8) und des Vorhersage-Prozessabbildes (10) den zukünftigen Energiebedarf zu ermitteln.

4. Automatisierungsgerät (1) nach Anspruch 3, wobei das Prognosemittel (9) einen Optimierungsalgorithmus aufweist, welcher dazu ausgestaltet ist Zuschaltzeitpunkte für die Betriebsmittel (2) bereitzustellen, wobei die Zuschaltzeitpunkte bezogen auf einen minimierten Gesamtenergiebedarf der Betriebsmittel (2) bereitgestellt werden.

5. Automatisierungsgerät (1) nach einem der Ansprüche 1 bis 4, aufweisend eine erste Kommunikationsschnittstelle (21) zur Kommunikation mit einem Energienetz (23) oder einem Energieerzeuger (24).

6. Automatisierungsgerät (1) nach einem der Ansprüche 1 bis 5, aufweisend eine zweite Kommunikationsschnittstelle (22) zur Kommunikation mit einem übergeordneten Leitsystem (25).

7. Automatisierungsgerät (1) nach einem der Ansprüche 5 oder 6, aufweisend ein Steuermodul (26) zum absenden von Netzcodes (NC) für einen energieoptimierten Betrieb des Energienetzes (23).

8. Automatisierungsgerät (1) nach einem der Ansprüche 1 bis 7, wobei in der Zuordnungsliste (8) den Betriebsmitteln (2) Schaltprioritäten (P1,...,P3) zugeordnet sind, wobei das Auswertemittel (7) dazu ausgestaltet ist das Prozessabbild (6) derart zu beeinflussen, dass nur Betriebsmittel (2) mit einer entsprechenden Schaltpriorität (P1,...,P3) zuschaltbar sind, um einem nicht zu übersteigenden Energieverbrauch einzuhalten.

9. Verfahren zur Steuerung eines industriellen Prozesses, wobei über ein in einer Recheneinheit (3) ablaufendes Programm Betriebsmittel (2) über ein Ausgabemittel (5) zur Ausgabe eines Prozessabbildes (6) geschaltet werden,
**dadurch gekennzeichnet, dass** eine Zuordnungsliste (8) mit für die Betriebsmittel (2) angegebenen Energieverbrauchswerten (E1,...,E3) erstellt wird, und diese in ein Automatisierungsgerät (1) geladen wird, wobei mit der Struktur des Programms in Abhängigkeit von einer Schaltanweisung für ein Betriebsmittel (2) eine Prognose über den zu erwartenden Energiebedarf der Betriebsmittel (2) ermittelt wird.

10. Verfahren nach Anspruch 9, wobei einem Betriebsmittel (2) eine Mehrzahl von Verbrauchswerten (E',...,E''') zugeordnet wird, wobei ein Betriebsstatus eines Betriebsmittels (2) in Unterzustände (S',..., S''') unterteilt wird.

11. Verfahren nach Anspruch 9 oder 10, wobei mittels der Prognose ein Vorhersage-Prozessabbild (10) für zukünftige Schaltzustände der Betriebsmittel (2) generiert wird.

12. Verfahren nach einem der Ansprüche 9 bis 11, wobei mittels eines Optimierungsalgorithmus Zuschaltzeitpunkte für die Betriebsmittel (2) berechnet werden, wobei die Zuschaltzeitpunkte bezogen auf einen minimierten Gesamtenergiebedarf der Betriebsmittel (2) bereitgestellt werden.

13. Verfahren nach einem der Ansprüche 9 bis 12, wobei über eine erste Kommunikationsschnittstelle (21) mit einer Steuerungsanlage (27) für Energienetze (23) oder Energieerzeugern (24) kommuniziert wird.

14. Verfahren nach einem der Ansprüche 9 bis 13, wobei über eine zweite Kommunikationsschnittstelle (22) mit einem übergeordneten Leitsystem (25) kommuniziert wird.

15. Verfahren nach einem der Ansprüche 9 bis 14, wobei Netzcodes (NC) für einen energieoptimierten Betrieb eines Energienetzes (23) bereitgestellt werden.

16. Verfahren nach einem der Ansprüche 9 bis 15, wobei in der Zuordnungsliste (8) den Betriebsmitteln (2) Schaltprioritäten (P,...,P3) zugeordnet werden, und das Prozessabbild (6) derart beeinflusst wird, dass bei einem vorgebbaren nicht zu übersteigenden Energieverbrauch nur Betriebsmittel (2) mit einer entsprechenden Schaltpriorität (P,...,P3) zugeschaltet werden.
